# EUROPEAN PATENT APPLICATION

(11) **EP 4 498 227 A1**
(43) Date of publication of application: **29.01.2025**
(21) Application number: 24190662.7
(22) Date of filing: 24.07.2024
(51) Int. Cl.: G06F 3/16, G10L 15/22

(54) **PROJECTION SYSTEM, TERMINAL DEVICE, PROJECTION DEVICE AND CONTROL METHOD THEREOF**

(30) Priority: 28.07.2023 US 202363529371 P; 13.10.2023 CN 202311325620
(71) Applicant: Coretronic Corporation, Hsin-Chu 300 (TW)
(72) Inventor: Lai, Hsin-Ya, 300 Hsin-Chu (TW); Chen, Ssu-Ming, 300 Hsin-Chu (TW)
(74) Representative: Ter Meer Steinmeister & Partner

(57) **Abstract**

The disclosure provides a projection system, a terminal device, a projection device, and a control method thereof. The control method includes the following steps: sending an original instruction to a cloud server through the terminal device; inputting the original instruction into a natural language model through the cloud server; in response to the original instruction corresponding to the operation of the projection device, generating a standard instruction according to the original instruction through the natural language model and receiving the standard instruction through the cloud server to control the projection device according to the standard instruction; and in response to the original instruction not corresponding to the operation of the projection device, generating feedback information according to the original instruction through the natural language model and sending the feedback information to at least one of the terminal device and the projection device through the cloud server.

## Description

This application claims priority of U.S. provisional application serial no. 63/529,371, filed on July 28, 2023, and China application serial no. 202311325620.8, filed on October 13, 2023.

### BACKGROUND

### Technical Field

The disclosure relates to a display technology, and in particular to a projection system, a terminal device, a projection device, and a control method thereof.

### Description of Related Art

Currently, the existing control methods of projectors require users to manually operate the remote control of the projector or operate the human-computer interface on the projector to operate related projection settings of the projector. Therefore, the conventional control methods of the projectors are quite inconvenient.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The disclosure provides a projection system, a terminal device, a projection device, and a control method thereof, which can realize a speech (voice) control function.

Other objects and advantages of the disclosure may be further understood from the technical features disclosed in the disclosure.

The object is solved by the features of the independent claims Preferred embodiments are given in the dependent claims.

In order to achieve one, part of, or all of the above purposes or other purposes, the control method of the projection device of the disclosure includes the following steps: sending an original instruction to a cloud server through the terminal device; inputting the original instruction into a natural language model through the cloud server; in response to the original instruction corresponding to the operation of the projection device, generating a standard instruction according to the original instruction through the natural language model and receiving the standard instruction through the cloud server to control the projection device according to the standard instruction; and in response to the original instruction not corresponding to the operation of the projection device, generating feedback information according to the original instruction through the natural language model and sending the feedback information to at least one of the terminal device and the projection device through the cloud server.

In order to achieve one, part of, or all of the above purposes or other purposes, the projection system of the disclosure includes a projection device, a cloud server, and a terminal device. The terminal device is coupled to the cloud server and the projection device and is configured to send the original instruction to the cloud server. The cloud server inputs the original instruction into the natural language model. In response to the original instruction corresponding to the operation of the projection device, the natural language model generates a standard instruction according to the original instruction, and the cloud server receives the standard instruction to control the projection device according to the standard instruction. In response to the original instruction not corresponding to the operation of the projection device, the natural language model is configured to generate feedback information according to the original instruction, and at least one of the terminal device and the projection device is configured to receive and display the feedback information.

In order to achieve one, part of, or all of the above purposes or other purposes, the projection device of the disclosure includes a projection module, a processor, and a communication interface. The processor is coupled to the projection module. The communication interface is coupled to the processor and is configured to connect to the cloud server. The processor is configured to: send the original instruction to the cloud server through the communication interface; in response to the original instruction corresponding to the operation of the projection device, receive a projector control code sent by the cloud server through the communication interface; and drive the projection module according to the projector control code.

In order to achieve one, part of, or all of the above purposes or other purposes, the terminal device of the disclosure is configured to control a projection device. The terminal device includes a screen and a processor. The screen is configured to display the control interface. The processor is coupled to the screen. The processor is configured to: receive the original instruction through the control interface; in response to the original instruction corresponding to the operation of the projection device, output a projector control code through the terminal device to the projection device to drive the projection device to execute an operation corresponding to the projector control code, in which the projector control code corresponds to the original instruction and projection device information; and in response to the original instruction not corresponding to the operation of the projection device, display the feedback information through the control interface.

In one or more embodiments, the control method for the projection device may further comprise converting a speech instruction into a text instruction through the terminal device and using the text instruction as the original instruction.

In one or more embodiments, the step of sending the original instruction to the cloud server may comprise sending the original instruction to the projection device through the terminal device to send the original instruction to the cloud server through the projection device.

In one or more embodiments, the step of inputting the original instruction into the natural language model may comprise inputting the original instruction and a rule instruction into the natural language model through the cloud server.

In one or more embodiments, the step of in response to the original instruction corresponding to the operation of the projection device may comprise outputting the standard instruction and the feedback information corresponding to the standard instruction according to the original instruction and the rule instruction through the natural language model; and sending the feedback information to the at least one of the terminal device and the projection device through the cloud server.

In one or more embodiments, the control method for the projection device may further comprise scanning pairing information of the projection device through the terminal device to obtain projection device information of the projection device.

In one or more embodiments, the step of receiving the standard instruction through the cloud server may further comprise converting the standard instruction into a projector control code according to the projection device information through the cloud server.

In one or more embodiments, the step of controlling the projection device according to the standard instruction may further comprise: receiving the projector control code from the cloud server through the projection device, or receiving the projector control code from the cloud server through the terminal device and sending the projector control code to the projection device.

In one or more embodiments, the step of controlling the projection device according to the standard instruction further may comprise receiving the standard instruction from the cloud server through the terminal device; and converting the standard instruction into a projector control code according to the projection device information through the terminal device and outputting the projector control code to the projection device.

In one or more embodiments, the step of generating the standard instruction according to the original instruction through the natural language model may comprise in response to the natural language model determining the original instruction being a single control instruction, generating the standard instruction corresponding to a single operation through the natural language model; and in response to the natural language model determining the original instruction being a multiple control instruction or a complex control instruction, generating the standard instruction corresponding to a plurality of single operations through the natural language model.

In one or more embodiments, the natural language model may be a chatbot.

In one or more embodiments, the terminal device may be further configured to convert a speech instruction into a text instruction and use the text instruction as the original instruction.

In one or more embodiments, the terminal device may be configured to send the original instruction to the projection device.

In one or more embodiments, the projection device may be configured to send the original instruction to the cloud server.

In one or more embodiments, the cloud server may be configured to input the original instruction and a rule instruction into the natural language model.

In one or more embodiments, in response to the original instruction corresponding to the operation of the projection device, the natural language model may be further configured to output the standard instruction and the feedback information corresponding to the standard instruction according to the original instruction and the rule instruction, and the cloud server may be configured to send the feedback information to the at least one of the terminal device and the projection device.

In one or more embodiments, the terminal device may be further configured to scan pairing information of the projection device to obtain projection device information of the projection device.

In one or more embodiments, the cloud server may be configured to convert the standard instruction into a projector control code according to the projection device information.

In one or more embodiments, the projection device may be configured to receive the projector control code from the cloud server, or receive the projector control code from the cloud server through the terminal device, and send the projector control code to the projection device.

In one or more embodiments, the terminal device may be configured to receive the standard instruction from the cloud server, and the terminal device may be configured to convert the standard instruction into a projector control code according to the projection device information, and output the projector control code to the projection device.

In one or more embodiments, in response to the natural language model determining the original instruction being a single control instruction, the natural language model may be configured to generate the standard instruction corresponding to a single operation; and in response to the natural language model determining the original instruction being a multiple control instruction or a complex control instruction, the natural language model may be configured to generate the standard instruction corresponding to a plurality of single operations.

In one or more embodiments, the processor may be configured to convert a speech instruction into a text instruction and use the text instruction as the original instruction.

In one or more embodiments, the processor may be configured to send the original instruction to the cloud server through the communication interface; and receive feedback information sent by the cloud server through the communication interface.

In one or more embodiments, the feedback information may be generated according to the original instruction and a rule instruction through a natural language model, and the natural language model may be stored in the cloud server or connected to the cloud server through a wireless network.

In one or more embodiments, the processor may be configured to: display a pairing interface through the screen; scan pairing information of the projection device through the pairing interface to obtain the projection device information of the projection device; and in response to account information corresponding to the terminal device being verified by a cloud server, display the control interface through the screen.

Based on the above, in the projection system, the terminal device, the projection device, and the control method thereof according to the disclosure, real-time recognition of the speech (voice) instruction input by the user may be performed through the natural language model, and the corresponding standard instruction is automatically generated to control the projection device, so as to effectively realize the speech (voice) control function.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

FIG. 1 is a schematic diagram of a projection system of the first embodiment of the disclosure.
FIG. 2 is a schematic diagram of a terminal device according to an embodiment of the disclosure.
FIG. 3 is a flow chart of a projection method according to an embodiment of the disclosure.
FIG. 4 is a schematic communication diagram of a speech control process according to an embodiment of the disclosure.
FIG. 5 is a flow chart of registration and subscription of the speech control process according to an embodiment of the disclosure.
FIG. 6 is a flow chart of verification of the speech control process of an embodiment of the disclosure.
FIG. 7 is a schematic diagram of a projection system of the second embodiment of the disclosure.
FIG. 8 is a schematic diagram of a projection system of the third embodiment of the disclosure.
FIG. 9 is a schematic diagram of a projection device according to an embodiment of the disclosure.

### DESCRIPTION OF THE EMBODIMENTS

It is to be understood that other embodiment may be utilized and structural changes may be made without departing from the scope of the appended claims. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

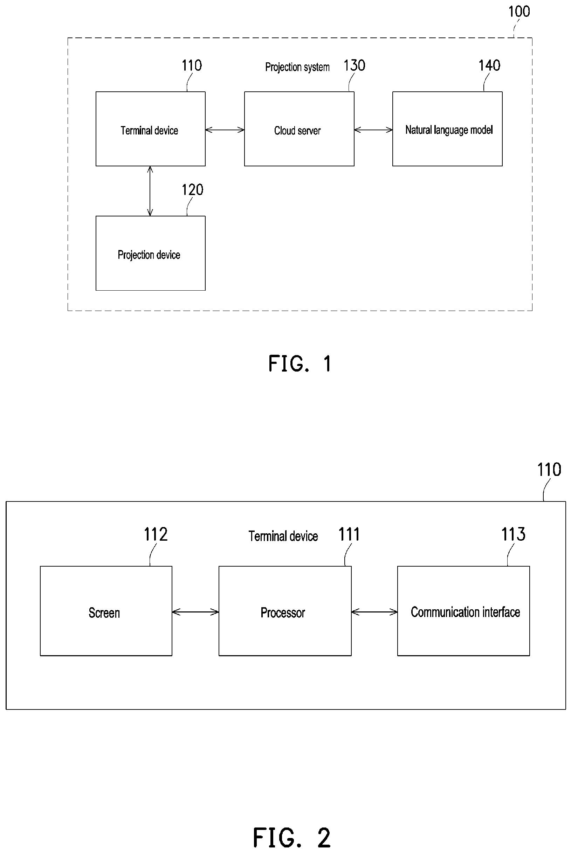

FIG. 1 is a schematic diagram of a projection system of the first embodiment of the disclosure. Referring to FIG. 1, a projection system 100 includes a terminal device 110, a projection device 120, a cloud server 130, and a natural language model 140. The terminal device 110 is coupled to the projection device 120 and the cloud server 130. The cloud server 130 is coupled to the natural language model 140. In this embodiment, the terminal device 110 may communicate with the projection device 120 and the cloud server 130 through wired and/or wireless communication methods. The wired communication method is, for example, a cable. The wireless communication method is, for example, Wifi, Bluetooth, and/or the Internet. The cloud server 130 may be, for example, connected to the natural language model 140 via the Internet.

In this embodiment, the terminal device 110 may have a speech (voice) input function. The terminal device 110 may be, for example, a smart phone, a remote control (controller) of the projection device 120, or other smart portable devices, or an electronic device with the speech input function. The projection device 120 may be a projector, the projection device 120 may include, for example, a communication interface and a projection module. In this embodiment, a user may perform speech (voice) input through the terminal device 110 to input a speech (voice) instruction related to controlling the projection device 120, and speech recognition is performed and an instruction is generated through the terminal device 110, the cloud server 130, and the natural language model 140 to realize a speech (voice) control function performed on the projection device 120.

In this embodiment, the natural language model 140 may be, for example, a chatbot, and the chatbot has a machine learning algorithm. The chatbot is, for example, any pre-trained chatbot such as chat generative pre-trained transformer (ChatGPT), Microsoft Bing, Google Bard, or ERNIE Bot. Alternatively, the natural language model 140 may be a dedicated chatbot trained on a domain-specific material. The natural language model 140 may be configured to execute natural language processing and understanding, dialogue management, speech-to-text and text-to-speech. The natural language model 140 may recognize various languages and multiple accents. In this embodiment, the natural language model 140 may be set in the cloud server 130 or a third party cloud server, and the cloud server 130 and the third party cloud server may include a processor (or processors) and a storage device respectively. The storage device is, for example, a storage media, and is configured to store the chat robot having the machine learning algorithm, and the processor is, for example, configured to execute the algorithm.

FIG. 2 is a schematic diagram of a terminal device according to an embodiment of the disclosure. Referring to FIG. 2, the terminal device of each embodiment of the disclosure may be implemented as the terminal device 110 shown in FIG. 2. The terminal device 110 may be, for example, a smartphone, a tablet computer, a personal computer, or other electronic devices. The terminal device 110 may include a processor 111, a screen 112, and a communication interface 113. The processor 111 is coupled to the screen 112 and the communication interface 113. In this embodiment, the processor 111 may be, for example, a central processing unit (CPU), a graphics processing unit (GPU), or other programmable general-purpose or special-purpose microprocessors, digital signal processors (DSP), programmable controllers, application specific integrated circuits (ASIC), programmable logic devices (PLD) or other similar processing devices. The terminal device 110 may include multiple processors, the processors may be the same or a combinations of the different processors. The terminal device 110 may also include a storage device (not shown). The storage device is, for example, any type of fixed or removable random access memory (RAM), read-only memory (ROM), flash memory, hard disk, or other circuits or chips with similar functions or a combination of the devices, circuits, and chips. One or more application programs are stored in the storage device. After being installed in the terminal device 110, the application program is executed by the processor(s) 111. In this embodiment, the screen 112 is configured to display images, and the screen 112 may be, for example, liquid crystal display (LCD), light emitting diode (LED) display, or organic light emitting diode (OLED) display. The terminal device 110 may also include a sound reception device, such as a microphone, and the sound reception device is coupled to the processor 111. The communication interface 113 is, for example, a chip or circuit adopting a wired and/or wireless communication technology or mobile communication technology. The mobile communication technology includes, for example, global system for mobile communications (GSM), third-generation (3G), fourth-generation (4G), or fifth-generation (5G).

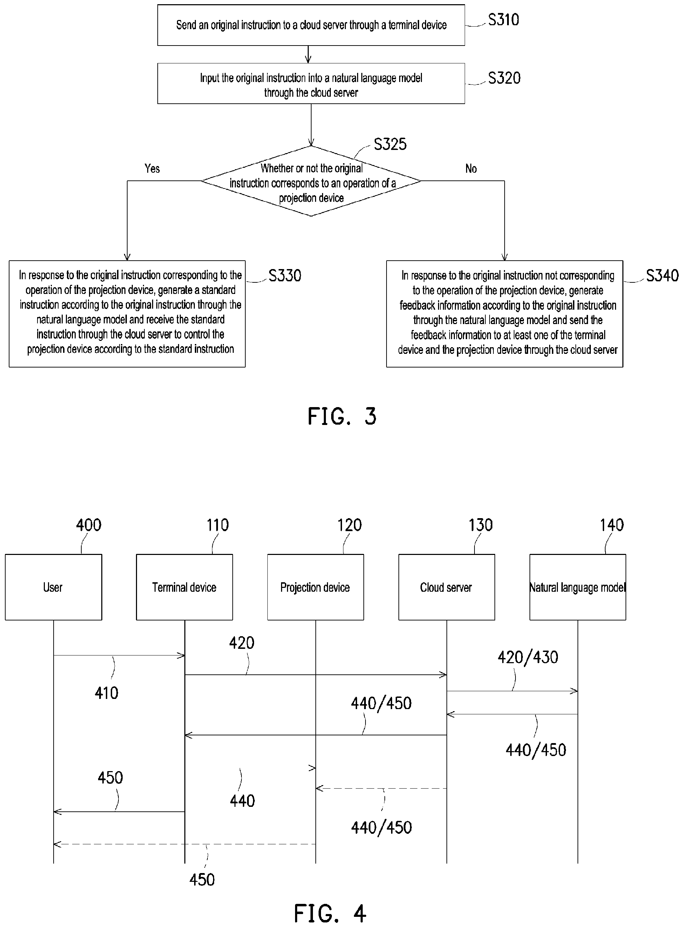

FIG. 3 is a flow chart of a projection method according to an embodiment of the disclosure. FIG. 4 is a schematic communication diagram of a speech control process according to an embodiment of the disclosure. Referring to FIG. 1 to FIG. 4, the projection system 100 may perform the following Steps S310 to S340 to realize the speech control function. A user 400 may input a speech (voice) instruction 410 through the sound reception device of the terminal device 110 to control the projection device 120. In Step S310, the user may send an original instruction 420 to the cloud server 130 through the terminal device 110. In this embodiment, the processor 111 of the terminal device 110 may, for example, display a control interface on the screen 112 through an application program, and may receive the original instruction 420 through the control interface. For example, the control interface includes an option (virtual button) to enable a recording function of the sound reception device. After the sound reception device is enabled, the control interface may receive the speech instruction 410 through the sound reception device. Regarding the original instruction 420, the speech instruction 410 in the form of a natural language input by the user may be converted into a text instruction by a speech recognition model of the cloud server 130 to use the text instruction as the original instruction 420. Alternatively, the original instruction 420 may be the speech instruction 410 in the form of the natural language input by the user. The speech instruction 410 input by the user may be directly uploaded to the natural language model 140. The natural language model 140 may be configured to read the speech instruction 410 to use the speech instruction 410 as the original instruction 420. In an embodiment, the processor 111 of the terminal device 110 may first convert the speech instruction 410 input by the user into the text instruction, and then use the text instruction as the original instruction 420 and provide to the cloud server 130. In an embodiment, the control interface may also include an option (virtual button) to input the text instruction. The processor 111 of the terminal device 110 may use the text instruction input by the user as the original instruction 420 and provide to the cloud server 130.

In Step S320, the cloud server 130 may input the original instruction 420 into the natural language model 140. In this embodiment, the cloud server 130 may input the original instruction 420 and a rule instruction 430 into the natural language model 140. In an embodiment, the rule instruction 430 has been stored in the storage device of the cloud server 130 in advance. In Step S325, the natural language model 140 identifies whether the original instruction 420 corresponds to an operation of the projection device 120, the operation of the projection device 120 is the operation that the projection device 120 may perform. In Step S330, in response to the original instruction 420 corresponding to the operation of the projection device 120, the natural language model 140 may generate and output a standard instruction 440 in the form of a non-natural language according to the original instruction 420 and receive the standard instruction 440 through the cloud server 130 to control the projection device 120 according to the standard instruction 440.

In Step S340, in response to the original instruction 420 not corresponding to the operation of the projection device 120, the natural language model 140 may generate feedback information 450 according to the original instruction 420 and send the feedback information 450 to at least one of the terminal device 110 and the projection device 120 through the cloud server 130. For example, the feedback information 450 may be displayed on the screen 112 of the terminal device 110 in the form of graphics and/or texts or the feedback information 450 may be projected on a projection target (such as a wall or a screen) through the projection device 120. Alternatively, the feedback information 450 may be played in an audio form through speakers of the terminal device 110 or the projection device 120.

The standard instruction 440 may be, for example, an instruction interpretable to the projection device 120. The cloud server 130 may send the standard instruction 440 to the terminal device 110, so that the terminal device 110 outputs the standard instruction 440 to the projection device 120 to control the projection device 120. Alternatively, the terminal device 110 may further convert the standard instruction 440 into a projector control code corresponding to a model of the projection device 120 according to projection device information of the projection device 120 and output the projector control code to the projection device 120. The projection device information may include, for example, the model and/or a series number of the projection device 120.

In an embodiment, the cloud server 130 may also convert the standard instruction 440 into the projector control code according to the projection device information of the projection device 120 to control the projection device 120. The terminal device 110 may receive the projector control code from the cloud server 130 and send the projector control code to the projection device 120. When the original instruction 420 corresponds to the at least one operation among multiple operations executable by the projection device 120, the terminal device 110 may output the projector control code to the projection device 120 to drive the projection device 120 to execute the operation(s) corresponding to the projector control code. The projector control code corresponds to the original instruction 420 and the projection device information. When the original instruction does not correspond to the operation(s) executable by the projection device 120, the terminal device 110 may display the feedback information 450 to the user 400 through the control interface.

The rule instruction 430 may be, for example, configured to limit that, the natural language model 140 may merely output the instruction interpretable to the projection device 120 or an instruction that can be converted into the projector control code of the projection device 120. For example, the rule instruction 430 may limit the natural language model 140 to merely output the standard instruction 440 executable to the projection device 120, the standard instruction 440 may be, for example, "power on", "power off", "volume up", "volume down", "connect to HDMI1", "connect to HDMI2", or the codes thereof, and the rule instruction 430 may request the natural language model 140 to summarize (classify) the original instruction 420 into any of the above-mentioned standard instructions 440 or to summarize (classify) into other standard instructions 440 after parsing the semantics of the original instruction 420 received. For example, the user may input the original instruction 420 such as "It's too loud" or "Turn down the volume", and the meaning thereof may both be identified through the natural language model 140 as requesting that the volume of the projection device 120 be reduced. Therefore, the original instruction 420 is summarized (classified) as the standard instruction 440 of "volume down". For example, the rule instruction 430 may include rules comprising tens, hundreds, or thousands of characters. The rule instruction 430 added each time the cloud server 130 sends the original instruction 420 to the natural language model 140 may be the same. The cloud server 130 may also optimize the rule instruction 430 anytime. For example, increase or decrease the quantity of conditions of the rule instruction 430 to achieve a fast feedback speed, a low cost, or more accurate feedback.

When the original instruction 420 is summarized as the standard instruction 440, the natural language model 140 may automatically identify that the original instruction 420 corresponds to the at least one operation of the projection device 120, and feedback the corresponding standard instruction 440 to the cloud server 130. When original instruction 420 is summarized as not belonging to the standard instruction 440, the natural language model 140 may automatically identify that the original instruction 420 does not correspond to the operation of the projection device 120, and the natural language model 140 may send the feedback information 450 to the at least one of the terminal device 110 and the projection device 120 to notify the user 400 that the speech instruction 410/ original instruction 420 cannot be executed. In an embodiment, when the original instruction 420 corresponds to the at least one operation of the projection device 120, the natural language model 140 simultaneously generates the standard instruction 440 and the feedback information 450 corresponding to the standard instruction 440, and the feedback information 450 may be transmitted to the at least one of the terminal device 110 and the projection device 120 to notify the user 400 that the projection device 120 has completed the at least one operation corresponding to the original instruction 420. The above process of summarizing the original instruction 420 into the standard instruction 440 is not a conventional table lookup method. Instead, the natural language model 140 directly performs parsing on the semantics of the original instruction 420 and the semantics of the standard instruction 440. Therefore, there is no need to create an instruction table or to list corresponding original instructions in advance.

The cloud server 130 may also request the content of the standard instruction 440 and/or the feedback information 450 output by the natural language model 140 to be limited to a hardware of the projection device 120 used by the user 400 through the rule instruction 430 . For example, assuming that the projection device 120 merely has a first high definition multimedia interface (HDMI) connection interface and a second HDMI connection interface, the rule instruction 430 may limit that when the natural language model 140 receives the original instruction 420 requesting to use or connect to a third HDMI connection interface or other types of connection interfaces, the natural language model 140 automatically replies the user 400 with the feedback information 450 of not being able to execute, and the natural language model 140 does not generate the standard instruction 440. Alternatively, the rule instruction 430 may also be defined to request that the natural language model 140 is required to assume being the projection device 120 regarding all subsequent feedback (the standard instruction 440 and the feedback information 450), and the rule instruction 430 may inform the natural language model 140 what hardware the assumed projection device 120 has and what operation(s) can be performed, so that the natural language model 140 feedbacks the corresponding standard instruction 440 and feedback information 450 according to the standpoint of the assumed projection device 120.

In this embodiment, the natural language model 140 may generate different standard instructions 440 according to types of the original instruction 420. The types of the original instruction 420 include a single control instruction, a multiple control instruction, a complex control instruction, and a question and answer instruction. The single control instruction is that a request corresponding to the original instruction 420 requires merely adjusting one parameter of the projection device 120 or merely including an instruction of one operation. When the natural language model 140 determines the original instruction 420 being the single control instruction, the rule instruction 430 is configured to limit the natural language model 140 to generate the standard instruction 440 corresponding to a single operation. For example, the original instruction 420 may be a single control instruction such as turning down the volume or switching the connected objects. The natural language model 140 may correspondingly generate the standard instruction 440 that corresponds to the single operation, that is, generate the standard instruction 440 that corresponds to turning down the volume or switching connected objects. The multiple control instruction is that a request corresponding to the original instruction 420 includes an instruction of multiple single operations. When the natural language model 140 determines the original instruction 420 being the multiple control instruction, the rule instruction 430 is configured to limit the natural language model 140 to generate the standard instruction 440 corresponding to the multiple single operations. The original instruction 420 may be, for example, a multiple control instruction related to turning down the volume and switching the connected objects. The natural language model 140 may correspondingly generate the standard instruction 440 that corresponds to multiple single operations, that is, generate multiple standard instructions 440 that can turn down the volume and switch the connected objects. The complex control instruction is that a request corresponding to the original instruction 420 includes adjusting multiple parameters of the projection device 120. The original instruction 420 may be, for example, a complex control instruction regarding the need to adjust the visual effects of the projected image. The original instruction 420 may be, for example, "Please improve the color of the image." The rule instruction 430 is configured to limit the natural language model 140 to generate the standard instruction 440 corresponding to multiple single operations. For example, the natural language model 140 generate multiple standard instructions 440 that adjust multiple parameters of the projected image such as color gamut, brightness, and sharpness.

The question and answer instruction is that a request corresponding to the original instruction 420 is not to control the projection device 120, but a single or multiple control instruction that asks questions. The original instruction 420 is, for example, "What services can you provide?" or "What is the weather like today?" When the natural language model 140 determines the original instruction 420 being the question and answer instruction, the rule instruction 430 is configured to limit the natural language model 140 to generate the feedback information 450 to the cloud server 130, or the cloud server 130 is connected to other network resources or databases to the generate feedback information 450, and further transmit the feedback information 450 to the terminal device 110 or the projection device 120 to provide a response to the user 400. When the request corresponding to the original instruction 420 is to ask for suggestions for watching videos, the natural language model 140 may also analyze the status of use, viewing habits, and other related data of the user 400 with respect to the projection device 120 and provide personalized suggestions. For example, the natural language model 140 may recommend specific types of movies, music, or programs according to preferences of the user 400, so that the user 400 may properly enjoy the entertainment and convenience brought by the projection system 100.

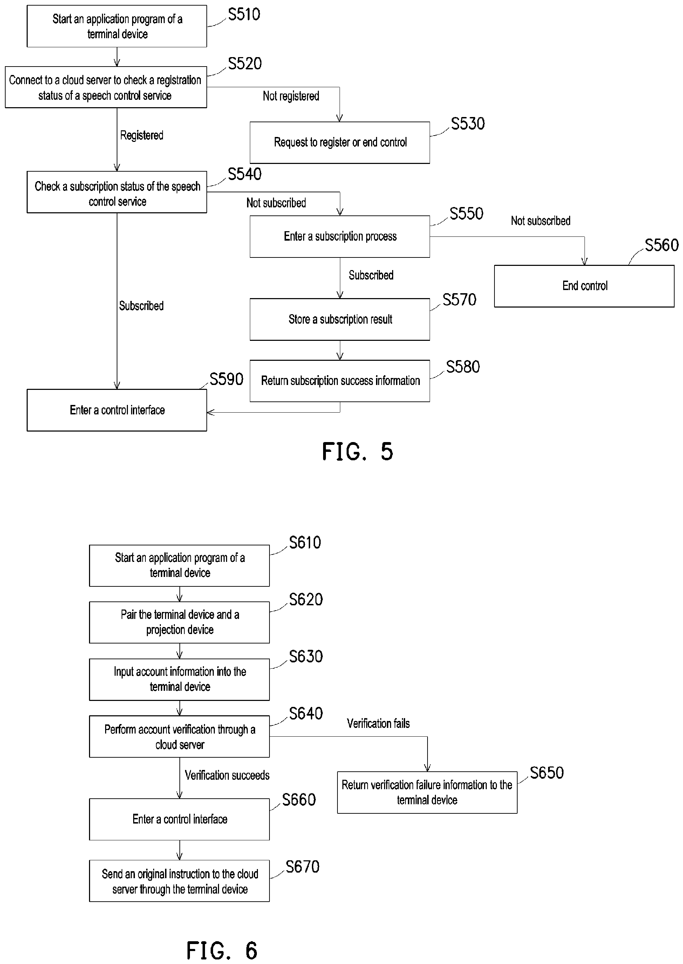

FIG. 5 is a flow chart of registration and subscription of the speech control process according to an embodiment of the disclosure. Referring to FIG. 1, FIG. 2, and FIG. 5, when the user uses the speech control function, the projection system 100 may perform the following Steps S510 to S590 to implement the registration and subscription of the speech control function. In Step S510, the user may start the application program of the terminal device 110. In Step S520, the terminal device 110 may be connected to the cloud server 130 to check a registration status of a speech (voice) control service. If the cloud server 130 determines the terminal device 110 not being registered, then in Step S530, the cloud server 130 requests the terminal device 110 to register or end control. If the cloud server 130 determines the terminal device 110 being registered, then in Step S540, the cloud server 130 may check a subscription status of the speech control service corresponding to the terminal device 110. If the speech control service of the terminal device 110 is subscribed, then in Step S590, the terminal device 110 may enter the control interface. The screen 112 of the terminal device 110 may display related operation images of the control interface. If the speech control service of the terminal device 110 is not subscribed, then in Step S550, the cloud server 130 may allow the terminal device 110 to enter a subscription process.

If the user is still not subscribed, then in Step S560, the cloud server 130 may end the control. If the user completes the subscription, then in Step S570, the cloud server 130 may store the subscription result. In Step S580, the cloud server 130 may return subscription success information to the terminal device 110. In Step S590, the terminal device 110 can enter the control interface. Therefore, the projection system 100 may perform an effective subscription operation of the speech control service.

FIG. 6 is a flow chart of verification of the speech control process of an embodiment of the disclosure. Referring to FIG. 1, FIG. 2, and FIG. 6, the user may pair the terminal device 110 and the projection device 120. The projection system 100 may perform, for example, the following Steps S610 to S670 to implement identity verification. In Step S610, the user may start the application program of the terminal device 110. In Step S620, the user may pair the terminal device 110 and the projection device 120. The terminal device 110 may obtain projection device information of the projection device 120 by scanning pairing information of the projection device 120. The pairing information may be, for example, to obtain through a two-dimensional barcode (such as a QR code), or to obtain through WiFi or Bluetooth the connection list for the terminal device 110 to connect with the projection device 120. The user 400 may select the projection device 120 to be paired from the connection list to obtain the pairing information. The terminal device 110 may display a pairing interface (including a camera shooting image) through the screen 112. The pairing interface may scan the pairing information of the projection device 120 to obtain the projection device information of the projection device 120 (such as the two-dimensional barcode scanning).

In Step S630, the user may input account information into the terminal device 110. The terminal device 110 may send the projection device information and the account information to the cloud server 130. In Step S640, the cloud server 130 may perform account verification. If the verification fails, then in Step S650, the cloud server 130 may return verification failure information to the terminal device 110. If the verification succeeds, it means that the account information corresponding to terminal device 110 is verified by cloud server 130, then in Step S660, the cloud server 130 may notify the terminal device 110, so that the terminal device 110 enters the control interface to display the control interface through the screen 112 and perform related registration and subscription services as shown in the embodiment of FIG. 5. When performing speech control, in Step S670, the terminal device 110 may send the original instruction 420 to the cloud server 130, and the projection system 100 may perform the above process as shown in FIG. 3. In this embodiment, since the cloud server 130 and/or the storage device of the natural language model 140 may store related historical data corresponding to the account information, the standard instruction 440 and the feedback information 450 generated by the natural language model 140 are consistent with the previous response. In an embodiment, the rule instruction 430 corresponding to each account information may be stored in the storage device of the natural language model 140. Therefore, the cloud server 130 does not need to repeatedly transmit the same rule instruction 430 to the natural language model 140.

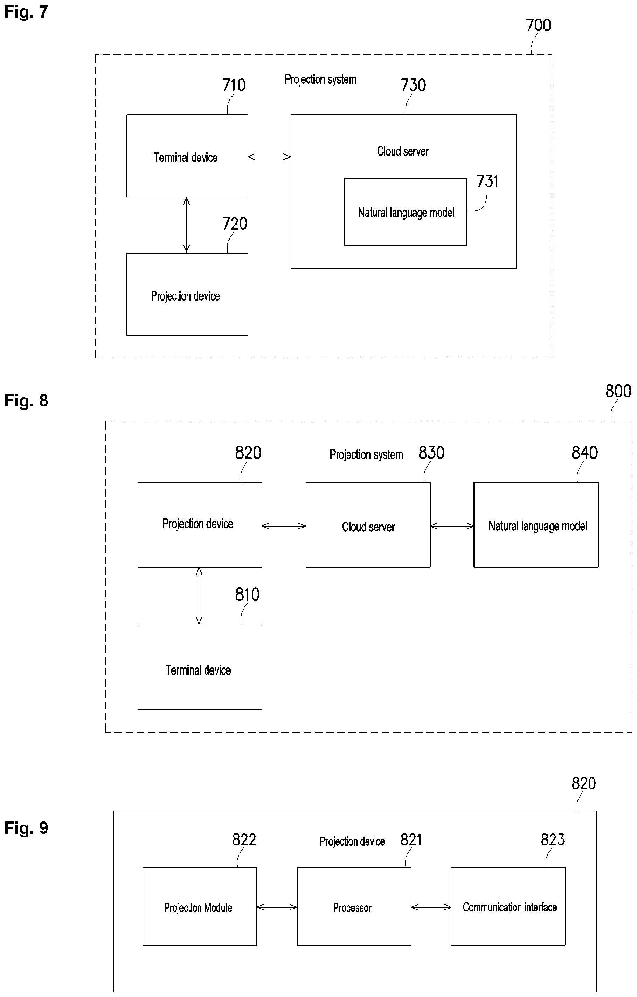

FIG. 7 is a schematic diagram of a projection system of the second embodiment of the disclosure. A projection system 700 in FIG. 7 is similar to the projection system 100 in FIG. 1 in terms of related technical features, operation processes, and advantages. Merely the differences will be described below. Referring to FIG. 7, the projection system 700 includes a terminal device 710, a projection device 720, and a cloud server 730. In this embodiment, a natural language model 731 may be installed into the cloud server 730 to be implemented in the same server. In this embodiment, the user may input the original instruction through the terminal device 710, and the original instruction is sent to the cloud server 730 through the terminal device 710. The cloud server 730 may input the original instruction into the natural language model 731.

FIG. 8 is a schematic diagram of a projection system of the third embodiment of the disclosure. FIG. 9 is a schematic diagram of a projection device according to an embodiment of the disclosure. A projection system 800 in FIG. 8 is similar to the projection system 100 in FIG. 1 in terms of related technical features, operation processes, and advantages. Merely the differences will be described below. Referring to FIG. 8 and FIG. 9, the projection system 800 includes a projection device 820, a cloud server 830, and a natural language model 840. The projection device 820 is coupled to the cloud server 830. The cloud server 830 is coupled to the natural language model 840. In this embodiment, the projection device 820 may include a processor 821, a projection module 822, and a communication interface 823. The processor 821 is coupled to the projection module 822 and the communication interface 823. The projection module 822 may include, for example, related optical elements such as light sources, light valves, projection lenses, and related circuit elements thereof, and the disclosure is not limited thereto. The communication interface 823 may be connected to the cloud server 830. The projection device 820 and the cloud server 830 may communicate through the wired and/or wireless communication methods. The wired communication method is, for example, a cable. The wireless communication method includes, for example, Wifi, Bluetooth, and/or the Internet. The cloud server 830 may be, for example, connected to the natural language model 840 via the Internet. In an embodiment, the natural language model 840 may also be installed into the cloud server 830.

In this embodiment, the projection device 820 further includes a sound reception device configured to receive the original instruction 420 from the user 400. The processor 821 may send the original instruction 420 to the cloud server 830 through the communication interface 823. In this regard, when the cloud server 830 determines that the original instruction 420 corresponds to the operation of the projection device 820, the cloud server 830 may further convert the standard instruction 440 into the projector control code according to the projection device information of the projection device 820, the processor 821 may receive the projector control code sent by the cloud server 830 through the communication interface 823, and the processor 821 may drive the projection module 822 according to the projector control code. Alternatively, the cloud server 830 may directly return the standard instruction 440 and/or the feedback information 450 to the projection device 820, and the processor 821 of the projection device 820 may further convert the standard instruction 440 into the projector control code to control the projection device 820.

In an embodiment, the projection system 800 may further include a terminal device 810, and the terminal device 810 is coupled to the projection device 820. The terminal device 810 may, for example, have a speech (voice) input function. The terminal device 810 may be, for example, a remote control or an electronic device with the speech input function of the projection device 820. If the terminal device 810 may also communicate with the cloud server 830, the cloud server 830 may directly return the feedback information 450 to the terminal device 810. If the terminal device 810 does not communicate with the cloud server 830, then the cloud server 830 may return the feedback information 450 to the terminal device 810 through the projection device 820. In this embodiment, the user may perform speech input through the terminal device 810 to input the original instruction 420 in a speech form regarding the control of the projection device 820. The terminal device 810 may send the original instruction 420 to the projection device 820 to send the original instruction 420 to the cloud server 830 through the projection device 820.

In this embodiment, the original instruction 420 may be a natural language instruction input by the user 400 through the terminal device 810, and the cloud server 830 may convert the natural language instruction into a text instruction, so that the text instruction is used as the original instruction 420. Alternatively, in an embodiment, the processor 821 may convert the speech instruction 410 input by the user 400 through the terminal device 810 into a text instruction, and the text instruction is used as the original instruction 420 to send to the cloud server 830.

In summary, in the projection system, the terminal device, the projection device, and the control method thereof according to the disclosure, the natural language instruction of the user may be received through the terminal device or the projection device, and may connect or execute the natural language model through the cloud server to perform real-time recognition of the natural language instruction input by the user and automatically generate the corresponding standard instruction. The standard instruction may be returned to the projection device through the terminal device or sent directly to the projection device to effectively realize the speech control function of the projection device.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. Therefore, the term "the disclosure", "the disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the present disclosure is intended to be dedicated to the public regardless of whether the element or component is explicitly recited in the following claims.

## Claims

1. A control method for a projection device (120), comprising:
sending (S310) an original instruction to a cloud server (130) through a terminal device (110);
inputting (S320) the original instruction into a natural language model (140) through the cloud server (130);
in response (S330) to the original instruction corresponding to an operation of the projection device (120), generating a standard instruction according to the original instruction through the natural language model (140) and receiving the standard instruction through the cloud server (130) to control the projection device (120) according to the standard instruction; and
in response (S340) to the original instruction not corresponding to the operation of the projection device (120), generating feedback information according to the original instruction through the natural language model (140) and sending the feedback information to at least one of the terminal device (110) and the projection device (120) through the cloud server (130).

2. The control method for the projection device as claimed in claim 1, further comprising converting a speech instruction into a text instruction through the terminal device (110) and using the text instruction as the original instruction.

3. The control method for the projection device as claimed in claim 1 or 2, wherein the step of sending (S310) the original instruction to the cloud server (130) comprises sending the original instruction to the projection device (120) through the terminal device (110) to send the original instruction to the cloud server (130) through the projection device (120).

4. The control method for the projection device as claimed in any one of the claims 1, 2 or 3 wherein the step of inputting (S320) the original instruction into the natural language model comprises inputting the original instruction and a rule instruction into the natural language model through the cloud server.

5. The control method for the projection device as claimed in claim 4, wherein the step of in response (S330) to the original instruction corresponding to the operation of the projection device (120) comprises:
outputting the standard instruction and the feedback information corresponding to the standard instruction according to the original instruction and the rule instruction through the natural language model (140); and
sending the feedback information to the at least one of the terminal device (110) and the projection device (120) through the cloud server (130).

6. The control method for the projection device as claimed in any one of the preceding claims, further comprising scanning pairing information of the projection device (120) through the terminal device (110) to obtain projection device information of the projection device (120), preferably the step of receiving the standard instruction through the cloud server (130) further comprises converting the standard instruction into a projector control code according to the projection device (120) information through the cloud server (130).

7. The control method for the projection device as claimed in claim 6, wherein the step of controlling the projection device (120) according to the standard instruction further comprises:
receiving the projector control code from the cloud server (130) through the projection device (120), or
receiving the projector control code from the cloud server (130) through the terminal device (110) and sending the projector control code to the projection device (120); or
the step of controlling the projection device (120) according to the standard instruction further comprises:
receiving the standard instruction from the cloud server (130) through the terminal device (110); and
converting the standard instruction into a projector control code according to the projection device information through the terminal device (120) and outputting the projector control code to the projection device (120).

8. The control method for the projection device as claimed in in any one of the preceding claims, wherein the step of generating the standard instruction according to the original instruction through the natural language model (140) comprises:
in response to the natural language model (140) determining the original instruction being a single control instruction, generating the standard instruction corresponding to a single operation through the natural language model (140); and
in response to the natural language model (140) determining the original instruction being a multiple control instruction or a complex control instruction, generating the standard instruction corresponding to a plurality of single operations through the natural language model (140).

9. The control method for the projection device as claimed in in any one of the preceding claims, wherein the natural language model (140) is a chatbot.

10. A projection system, comprising:
a projection device (120);
a cloud server (130); and
a terminal device (110) coupled to the cloud server (130) and the projection device (120) and configured to send an original instruction to the cloud server (130),
wherein the cloud server (130) is configured to input the original instruction into a natural language model (140), in response to the original instruction corresponding to an operation of the projection device (120), the natural language model (140) is configured to generate a standard instruction according to the original instruction, and the cloud server (130) is configured to receive the standard instruction to control the projection device (120) according to the standard instruction; and
in response to the original instruction not corresponding to the operation of the projection device (120), the natural language model (140) is configured to generate feedback information according to the original instruction, and at least one of the terminal device (110) and the projection device (120) is configured to receive and display the feedback information.

11. A projection device (820), comprising:
a projection module (822);
a processor (821) coupled to the projection module (822);
a communication interface (823) coupled to the processor (821) and configured to connect to a cloud server (830), wherein the processor (821) is configured to:
send an original instruction to the cloud server (830) through the communication interface (823);
in response to the original instruction corresponding to an operation of the projection device (820), receive a projector control code sent by the cloud server (830) through the communication interface (823); and
control the projection module (822) according to the projector control code.

12. The projection device as claimed in claim 11, wherein the processor (821) is configured to convert a speech instruction into a text instruction and use the text instruction as the original instruction and/or the processor (821) is configured to send the original instruction to the cloud server (830) through the communication interface (823); and receive feedback information sent by the cloud server (830) through the communication interface (823).

13. The projection device as claimed in claim 12, wherein the feedback information is generated according to the original instruction and a rule instruction through a natural language model (840), and the natural language model (840) is stored in the cloud server (830) or connected to the cloud server (830) through a wireless network.

14. A terminal device (110) configured to control a projection device (120), wherein the terminal device (110) comprises:
a screen (112) configured to display a control interface; and
a processor (111) coupled to the screen (112), wherein the processor (111) is configured to:
receive an original instruction through the control interface;
in response to the original instruction corresponding to an operation of the projection device (120), output a projector control code through the terminal device (110) to the projection device (120) to drive the projection device (120) to execute an operation corresponding to the projector control code, wherein the projector control code corresponds to the original instruction and projection device information; and
in response to the original instruction not corresponding to the operation of the projection device, display feedback information through the control interface.

15. The terminal device as claimed in claim 14, wherein the processor (111) is configured to:
display a pairing interface through the screen (112);
scan pairing information of the projection device (120) through the pairing interface to obtain the projection device information of the projection device (120); and
in response to account information corresponding to the terminal device (110) being verified by a cloud server, display the control interface through the screen (112).
